# EUROPÄISCHE PATENTSCHRIFT

(11) **EP 1 009 920 B1**
(45) Veröffentlichungstag und Bekanntmachung des Hinweises auf die Patenterteilung: **11.06.2003**
(21) Anmeldenummer: 98948783.0
(22) Anmeldetag: 12.08.1998
(51) Int. Cl.: F01K 23/10

(54) **DAMPFERZEUGER, INSBESONDERE ABHITZEDAMPFERZEUGER, UND VERFAHREN ZUM BETRIEB DIESES DAMPFERZEUGERS**
STEAM GENERATOR, ESPECIALLY WASTE HEAT RECOVERY STEAM GENERATOR AND METHOD FOR OPERATING SAID GENERATOR
GENERATEUR DE VAPEUR, NOTAMMENT GENERATEUR DE VAPEUR DE RECUPERATION, ET PROCEDE POUR LE FONCTIONNEMENT DE CE GENERATEUR DE VAPEUR

(30) Priorität: 25.08.1997 DE 19736885
(43) Veröffentlichungstag der Anmeldung: 21.06.2000
(73) Patentinhaber: SIEMENS AKTIENGESELLSCHAFT, 80333 München (DE)
(72) Erfinder: SCHMID, Erich, D-91080 Marloffstein (DE); STIERSTORFER, Helmut, D-91054 Erlangen (DE); LOCKWOOD, Carl, D-91058 Erlangen (DE); LENK, Uwe, D-08058 Zwickau (DE)
(86) Internationale Anmeldenummer: DE9802330
(87) Internationale Veröffentlichungsnummer: WO99010628

(56) Entgegenhaltungen:
- EP-A- 0 777 036
- PATENT ABSTRACTS OF JAPAN vol. 014, no. 532 (M-1051), 22. November 1990 & JP 02 223701 A (TOSHIBA CORP), 6. September 1990

## Beschreibung

Die Erfindung betrifft einen Dampferzeuger, insbesondere Abhitzedampferzeuger, mit einem langgestreckten Gaszug, der ein Eintrittsende für Heißgas und ein Austrittsende für das abgekühlte Heißgas aufweist, sowie mit einer ersten Verdampferheizfläche, an der eingangsseitig eine erste Zufuhrleitung für Speisewasser durchflußmäßig angeschlossen ist und die sich im Gaszug in Durchströmrichtung des Heißgases gesehen vor einer zweiten Verdampferheizfläche befindet, die sowohl eingangs- als auch ausgangsseitig durchflußmäßig an einer mit einer zweiten Zufuhrleitung für Speisewasser versehenen Niederdrucktrommel angeschlossenen ist. Hierbei weist die erste Zufuhrleitung eine erste Aufbereitungsstelle zum Zugeben und/oder Entziehen von Chemikalien zur Wasseraufbereitung und die zweite Zufuhrleitung eine zweite Aufbereitungsstelle zum Zugeben und/oder Entziehen von Chemikalien zur Wasseraufbereitung auf.

Ein derartiger Dampferzeuger ist aus Dechamps P J and Galopin, J-F., "Once-Through Heat Recovery Steam Generators Working with Sub-and Supercritical Steam Conditions for Combined Cycles", ASME Paper 97-GT337, International Gas Turbine & Aeroengine Congress & Exhibition, Orlando, Florida, June 2 bis June 5, 1997, insbesondere Seite 7, linke Spalte, zweiter Absatz, und aus der Patentschrift EP 0 777 036 bekannt.

Die im Durchlauf zu betreibende, die erste Verdampferheizfläche einschließende höhere Druckstufe dieses Dampferzeugers läßt bei hohen Temperaturen des Heißgases auch die Realisierung hoher Betriebsdrucke bis hin zu überkritischen Zuständen zu. Dies ermöglicht einen verbesserten Wirkungsgrad. Ferner benötigt die höhere Druckstufe allenfalls nur eine verhältnismäßig dünnwandige Wasserabscheideflasche am Dampfaustritt der ersten Verdampferheizfläche, so daß schnellere Anfahrzeiten des Dampferzeugers und schnellere Reaktionen dieses Dampferzeugers auf Laständerungen möglich sind. Die zweite Verdampferheizfläche mit der ihr zugeordneten Niederdrucktrommel wird im Umlauf betrieben und nutzt die niedrige Temperatur aus, die das Heißgas nach dem Passieren der ersten Verdampferheizfläche noch hat. Auch dies führt zu einer Verbesserung des Wirkungsgrads. Wegen des niedrigen Drucks in der Niederdrucktrommel kann diese ebenfalls verhältnismäßigdünnwandig sein. Sie behindert daher weder schnelle Anfahrzeiten noch schnelles Reagieren des Dampferzeugers auf Laständerungen. Auch weist die Umlaufströmung in der zweiten Verdampferheizfläche keinerlei Instabilitäten auf und führt zu keinen Erosionen in dieser zweiten Verdampferheizfläche.

Die im Durchlauf betriebene erste Verdampferheizfläche benötigt jedoch eine andere Konditionierung des Speisewassers als eine im Umlauf betriebene Verdampferheizfläche, also als die, sowohl eingangs- als auch ausgangsseitig an der Niederdrucktrommel angeschlossene zweite Verdampferheizfläche.

Der Erfindung liegt die Aufgabe zugrunde, dafür zu sorgen, daß sowohl die im Durchlauf betriebene erste Verdampferheizfläche als auch die im Umlauf betriebene zweite Verdampferheizfläche nur das Speisewasser erhält, das für sie konditioniert ist.

Zur Lösung dieser Aufgabe hat ein Dampferzeuger der eingangs erwähnten Art erfindungsgemäß die Merkmale des kennzeichnenden Teils des Patentanspruchs 1. Durch Chemikalien, die an der ersten Aufbereitungsstelle der ersten Zufuhrleitung zugegeben und/oder entfernt werden, kann das Speisewasser für die erste Verdampferheizfläche entsprechend deren Erfordernissen konditioniert werden, während durch Zugeben und/oder Entfernen von Chemikalien an der zweiten Aufbereitungsstelle der zweiten Zufuhrleitung das Speisewasser für die zweite Verdampferheizfläche entsprechend deren Erfordernissen konditioniert werden kann. Beide Zufuhrleitungen können daher an der gleichen, gemeinsamen Speisewasserversorgungseinrichtung angeschlossen sein. Diese Speisewasserversorgungseinrichtung kann Ausgangsspeisewasser einer einheitlichen Ausgangsqualität liefern und beispielsweise ein Hotwell, eine Speisewasseraufbereitungsanlage oder ein Kondensatsammelbehälter sein.

Bei der Weiterbildung des Dampferzeugers nach Patentanspruch 2 kann in der ersten Zufuhrleitung konditioniertes Speisewasser für die zweite Verdamferheizfläche nachkonditioniert werden.

Bei der Weiterbildung des Dampferzeugers nach Patentanspruch 3 kann mit Chemikalien, die an der ersten Aurbereitungsstelle in die erste Zufuhrleitung zugegeben werden, das Speisewasser in der ersten Zufuhrleitung für beide Verdampferheizfläche vorkonditioniert werden. Mit an der zweiten Aufbereitungsstelle in die zweite Zufuhrleitung zugegebenen Chemikalien kann für beide Verdampferheizflächen vorkonditioniertes Speisewasser aus der ersten Zufuhrleitung für die zweite Verdampferheizfläche nachkonditioniert werden. An der dritten Aufbereitungsstelle schließlich kann Speisewasser in der ersten Zufuhrleitung, das schon für beide Verdampferheizflächen vorkonditioniert ist, durch Zugabe und/oder Entziehen weiterer Chemikalien für die erste Verdampferneizfläche nachkonditioniert werden.

Mit der Weiterbildung des Dampferzeugers nach Patentanspruch 4 kann das Speisewasser für die erste Verdampferheizfläche durch Zugabe und/oder Entziehen von Chemikalien an der ersten Aufbereitungsstelle und das Speisewasser für die zweite Verdampferheizfläche durch Zugabe und/oder Entziehen von Chemikalien an der zweiten Aufbereitungsstelle genau konditioniert werden.

Das in Patentanspruch 5 angesprochene Entgasungsgefäß kann in vorteilhafter Weise in der Niederdrucktrommel integriert sein, die mit der zweiten Zufuhrleitung für Speisewasser versehen ist.

Patentanspruch 6 gibt ein vorteilhaftes Verfahren zum Betreiben des erfindungsgemäßen Dampferzeugers an und ist auf eine Modifizierung dieses Verfahrens für den Dampferzeuger nach Patentanspruch 2, Patentanspruch 7 auf eine Modifizierung für den Dampferzeuger nach Patentanspruch 3 und Patentanspruch 8 auf eine Modifizierung für einen Dampferzeuger nach Patentanspruch 4 gerichtet.

Die Erfindung und ihre Vorteile seien anhand der Zeichnungen näher erläutert:

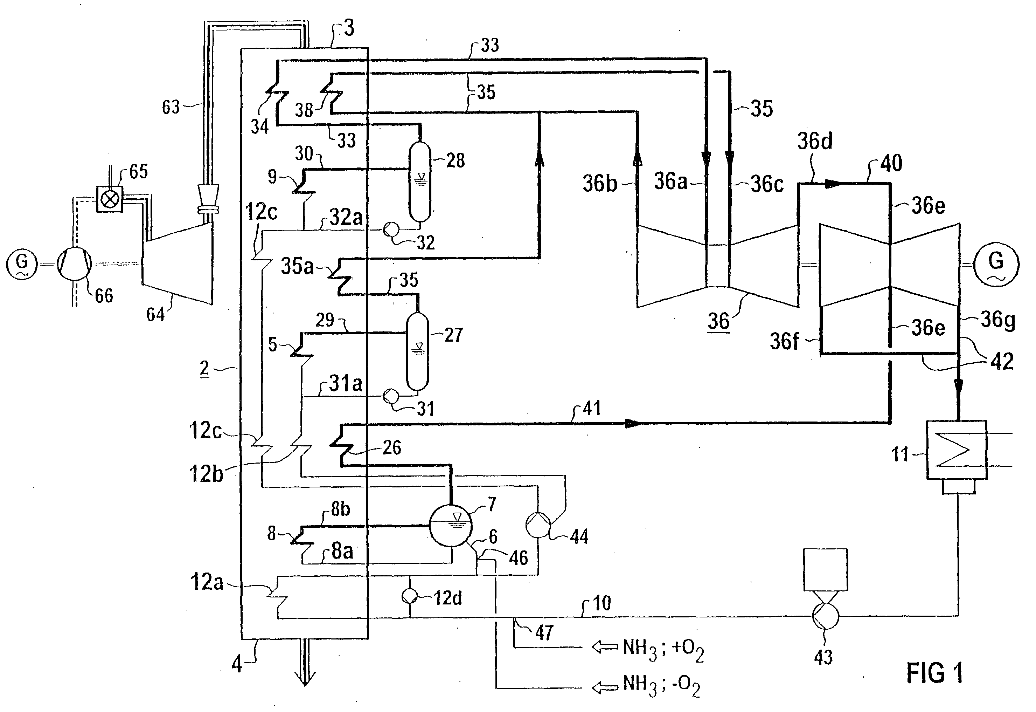

Die Figuren 1 bis 3 zeigen schematisch eine kombinierte Gasturbinen-Dampfturbinenanlage eines elektrischen Kraftwerks. In diesen drei Figuren sind gleiche Teile mit gleichen Bezugszeichen versehen.

Die Anlage nach Figur 1 weist einen Abhitzedampferzeuger mit einem langgestreckten Gaszug 2 auf. Dieser Gaszug 2 hat ein Eintrittsende 3 und ein Austrittsende 4. Innerhalb dieses Gaszugs 2 sind drei Verdampferheizflächen 9, 5 und 8 erkennbar. Diese Verdampferheizflächen 9, 5 und 8 sind im Gaszug 2 in Durchströmungsrichtung für Heißgas vom Eintrittsende 3 zum Austrittsende 4 gesehen hintereinander angeordnet. Die Verdampferheizfläche 8 ist dem Austrittsende 4 des Gaszugs und die Verdampferheizfläche 9 dem Eintrittsende 3 am nächsten.

Die Verdampferheizfläche 5 befindet sich zwischen den beiden Verdampferheizflächen 8 und 9.

Die Verdampferheizfläche 8 ist sowohl mit ihrem Eingang 8a als auch mit ihrem Ausgang 8b an einer Niederdrucktrommel 7 angeschlossen. Zu dieser Niederdrucktrommel 7 führt eine Zufuhrleitung 6 für Speisewasser. Weiterhin geht von dieser Niederdrucktrommel 7 eine Niederdruck-Dampfleitung 41 ab. Sie enthält eine Überhitzerheizfläche 26, die zwischen den beiden Verdampferheizflächen 5 und 8 im Gaszug 2 angeordnet ist.

Jeder der beiden Verdampferheizflächen 5 und 9 ist eine Anfahrflasche 27 bzw. 28 zugeordnet, in die eine von der Verdampferheizfläche 5 bzw. 9 abgehende Dampfleitung 29 bzw. 30 seitlich mündet.

Vom Boden jeder der beiden Anfahrflaschen 27 und 28 geht eine zum jeweiligen Eingang der Verdampferheizfläche 5 bzw. 9 geführte und eine Wasserpumpe 31 bzw. 32 enthaltende Rückfuhrleitung 31a bzw. 32a ab. Durch diese Rückfuhrleitung kann in der jeweiligen Anfahrflasche 27 bzw. 28 abgeschiedenes Kondensatwasser zurück zum Eingang der jeweiligen Verdampferheizfläche 5 bzw. 9 gepumpt werden.

Eine Hochdruck-Dampfleitung 33, die von der der Verdampferheizfläche 9 zugeordneten Anfahrflasche 28 ausgeht, enthält eine Überhitzerheizfläche 34, die sich im Gaszug 2 des Abhitzedampferzeugers zwischen der Verdampferheizfläche 9 und dem Eintrittsende 3 des Gaszugs 2 befindet. Eine weitere Dampfleitung 35 geht einerseits von der Anfahrflasche 27 aus, die der Verdampferheizfläche 5 zugeordnet ist. Sie enthält eine Überhitzerheizfläche 35a, die im Gaszug 2 zwischen den beiden Verdampferheizflächen 5 und 9 angeordnet ist. Andererseits geht diese Dampfleitung 35 auch vom Dampfaustritt 36b des Hochdruckteils einer Dampfturbine 36 aus, zu dessen Dampfeintritt 36a die von der Anfahrflasche 28 ausgehende Hochdruck-Dampfleitung 33 geführt ist. Die Dampfleitung 35 enthält eine Überhitzerheizfläche 38, die sowohl der Überhitzerheizfläche 35a als auch dem Dampfaustritt 36b durchströmungsmäßig nach geschaltet ist und die sich innerhalb des Gaszugs 2 ebenfalls zwischen dem Eintrittsende 3 dieses Gaszugs 2 und der Verdampferheizfläche 9 befindet. Von der Überhitzerheizfläche 38 ausgehend ist die Dampfleitung 35 zum Dampfeintritt 36c des Mitteldruckteils der Dampfturbine 36 geführt. Der Dampfaustritt 36d dieses Mitteidruckteils der Dampfturbine 36 ist über eine Dampfleitung 40 mit dem Dampfeintritt 36e der beiden Niederdruckteile der Dampfturbine 36 durchflußmäßig verbunden. Zu diesem Dampfeintritt 36e führt auch eine Niederdruck-Dampfleitung 41, die von der Niederdrucktrommel 7 ausgeht und die eine Überhitzerheizfläche 26 enthält. Diese Überhitzerheizfläche 26 ist im Gaszug 2 zwischen den beiden Verdampferheizflächen 5 und 8 angeordnet. Von zwei Dampfaustritten 36f und 36g des Niederdruckteils der Dampfturbine 36 geht eine Abdampfleitung 42 aus, die zu einem Kondensator 11 geführt ist.

Von diesem Kondensator 11 führt eine Zufuhrleitung 10 für Speisewasser, die eine Kondensatpumpe 43 mit zugeordneter Kondensatreinigungsanlage sowie eine im Gaszug 2 befindliche Vorwärmheizfläche 12a und eine dieser Vorwärmheizfläche 12a nachgeschaltete Hochdruck/Mitteldruck-Speisewasserpumpe 44 enthält, zu den Eingangsseiten der im Gaszug 2 befindlichen Verdampferheizflächen 5 und 9. Die Vorwärmheizfläche 12a ist zwischen dem Austrittsende 4 des Gaszugs 2 und der Verdampferheizfläche 8 im Gaszug 2 angeordnet. Den Eingangsseiten der Verdampferheizflächen 5 und 9 ist jeweils eine Vorwärmheizfläche 12b bzw. 12c für Speisewasser in der Zufuhrleitung 10 für Speisewasser durchflußmäßig vorgeschaltet. Diese Vorwärmheizflächen 12b und 12c sind im Gaszug 2 zwischen der Verdampferheizfläche 8 und der Verdampferheizfläche 5 bzw. 9 angeordnet. Parallel zur Vorwärmheizfläche 12a ist eine Umwälzpumpe 12d geschaltet, die Speisewasser vom Ausgang dieser Vorwärmheizfläche 12a zurück zu ihrem Eingang zum Erhöhen der Temperatur des in die Vorwärmheizfläche 12a eintretenden Speisewassers pumpen kann.

Die Zufuhrleitung 6 für Speisewasser führt zu der Niederdrucktrommel 7 und ist an der Zufuhrleitung 10 für Speisewasser durchflußmäßig hinter der Vorheizfläche 12a und hinter der Umlaufpumpe 12d, jedoch vor der Hochdruck-Mitteldruck-Speisewasserpumpe 44 angeschlossen. Eine Aufbereitungsstelle 46, die beispielsweise ein Anschlußstutzen ist, befindet sich an dieser Zufuhrleitung 6 durchflußmäßig hinter der Anschlußstelle dieser Zufuhrleitung 6 an der Zufuhrleitung 10 für Speisewasser.

Eine andere Aufbereitungsstelle 47, die beispielsweise ebenfalls ein Anschlußstutzen ist, befindet sich außerhalb des Gaszugs 2 an der Zufuhrleitung 10 zwischen der Kondensatpumpe 43 und der Vorwärmheizfläche 12a vor der Umlaufpumpe 12d.

Zum Eintrittsende 3 des Gaszugs 2 führt eine Leitung 63 für Heißgas, das aus einer Gasturbine 64 austritt. Dem Eintritt dieser Gasturbine 64 ist eine Brennkammer 65 mit vorgeschaltetem von der Gasturbine 64 angetriebenen Kompressor 66 zugeordnet. Sowohl die Gasturbine 64 als auch die Dampfturbine 37 treiben jeweils einen elektrischen Generator G an.

An der Aufbereitungsstelle 47 kann durch Zugabe von NH₃ und O₂ das Speisewasser entsprechend den Vorschriften konditioniert werden, die für die Verdampferheizflächen 5 und 9 gelten. Durch Entgasen des Speisewassers, also Entfernen von O₂, und weitere Zugabe von NH₃ an der Aufbereitungsstelle 46 wird das der Niederdrucktrommel 7 zugeführte Speisewasser so nachkonditioniert, daß es den Vorschriften für die Verdammpferheizfläche 8 entspricht.

Der die Dampfturbine 36 durch die Abdampfleitung 42 verlassende Abdampf wird im Kondensator 11 zu entgastem Kondensat niedergeschlagen, das in der Kondensatreinigungsanlage 43 gereinigt wird.

An der Aufbereitungsstelle 47 wird dem Speisewasser ein pH-Wert von etwa 8.5 und ein O₂-Gehalt von etwa 50 bis 100 ppb eingestellt. In einem beheizten Entgasungsgefäß, das zur Niederdrucktrommel 7 gehört und das der Aufbereitungsstelle 46 zugeordnet ist, wird der O₂-gehalt des der Niederdrucktrommel 7 zugeführten Speisewassers auf ca. 20 ppb abgesenkt. Außerdem wird an der Aufbereitungsstelle 46 dem der Niederdrucktrommel 7 zuzuführenden Speisewasser noch NH₃ zudosiert, so daß der pH-Wert des Speisewassers schließlich auf 9 bis 9.5 angehoben wird.

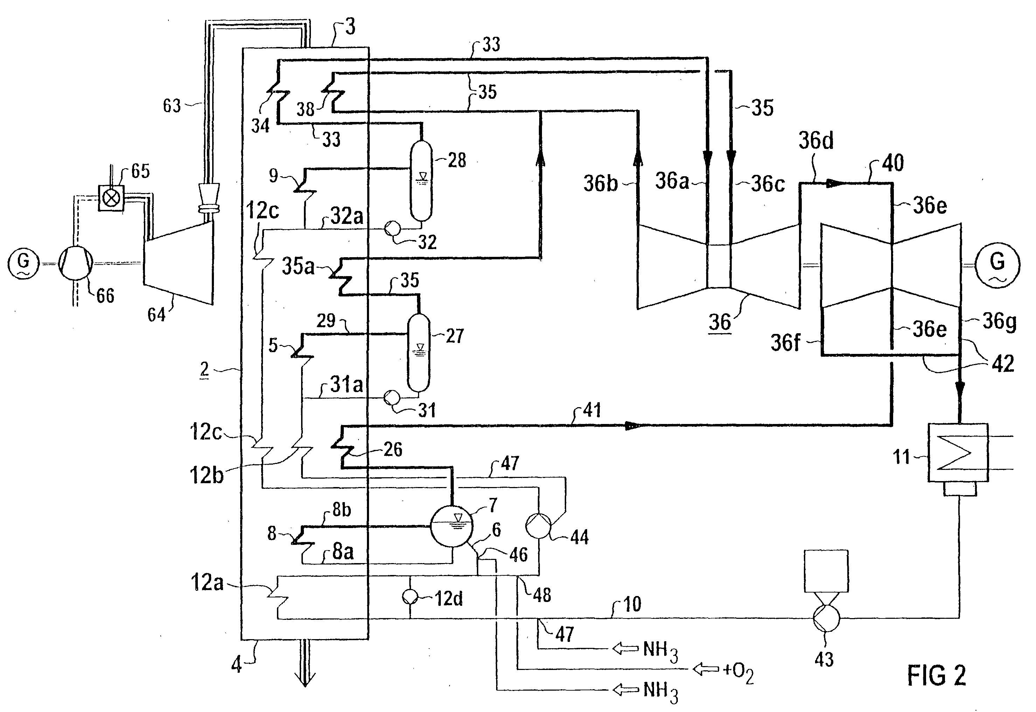

Die kombinierte Gasturbinen-Dampfturbinenanlage nach Figur 2 unterscheidet sich von der Anlage nach Figur 1 nur dadurch, daß außer den beiden Aufbereitungsstellen 46 und 47 zum Zugeben und/oder Entfernen von Chemikalien zur Wasseraufbereitung noch eine dritte solche Aufbereitungsstelle 48 vorhanden ist. Diese ist beispielsweise ebenfalls ein Anschlußstutzen und befindet sich in der ersten Zufuhrleitung 10 für Speisewasser durchflußmäßig hinter der Anschlußstelle der zweiten Zufuhrleitung 6 und vor der Hochdruck/Mitteldruck-Speisewasserpumpe 44 und damit vor den Verdampferheizflächen 5 und 9.

Durch Zugabe von NH₃ zum Speisewasser an der Aufbereitungsstelle 47 in Fig. 2 kann dieses Speisewasser vorkonditioniert werden. An der Aufbereitungsstelle 46 wird das Speisewasser durch weitere Zugabe von NH₃ nachkonditioniert, so daß es den Vorschriften für die Verdampferheizfläche 8 entspricht. An der Aufbereitungsstelle 48 wird das Speisewasser durch Zugeben von O₂ so nachkonditioniert, daß es den Vorschriften für die Verdampferheizflächen 5 und 9 entspricht. Ein Entfernen von Chemikalien ist an keiner der Stellen 46 bis 48 erforderlich, auch ist keine Entgasung notwendig.

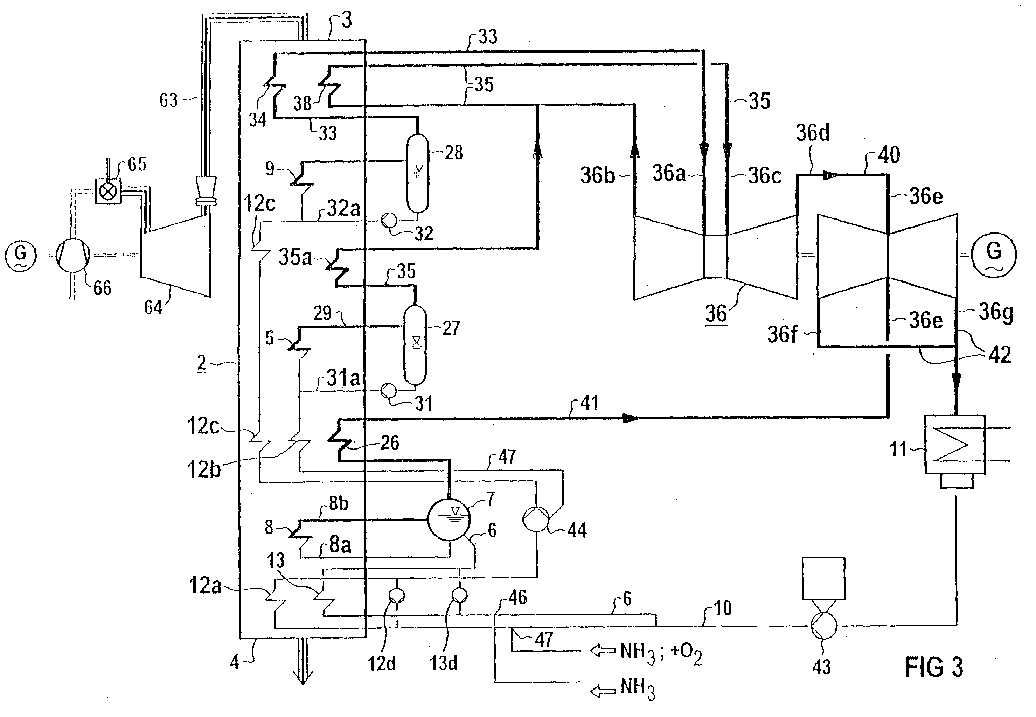

Die kombinierte Gasturbinen-Dampfturbinenanlage nach Figur 3 unterscheidet sich von der Anlage nach Figur 1 nur dadurch, daß die zweite Zufuhrleitung 6 eine innerhalb des Gaszugs 2 angeordnete zweite Vorwärmheizfläche 13 enthält und an einer Anschlußstelle vor der ersten Vorwärmheizfläche 12a an der ersten Zufuhrleitung 10 zwischen der ersten Aufbereitungsstelle 47 und der Kondensatpumpe 43 durchflußmäßig angeschlossen ist. Die zweite Aufbereitungsstelle 46 ist an der zweiten Zufuhrleitung 6 durchflußmäßig vor der zweiten Vorwärmheizfläche 13 vorgesehen. Durch Zugabe von NH₃ und O₂ an der ersten Aufbereitungsstelle 47 kann das von der Kondensatpumpe 43 kommende Speisewasser genau entsprechend den Vorschriften für die Verdampferheizflächen 5 und 9 und an der Aufbereitungsstelle 46 durch Zugabe von NH₃ genau entsprechend den Vorschriften für die Verdampferheizfläche 8 konditioniert werden.

Parallel zur Vorwärmheizfläche 13 jedoch durchströmmäßig hinter der Anschlußstelle der zweiten Zufuhrleitung 6 an der ersten Zufuhrleitung 10, liegt ebenfalls eine Umwälzpumpe 13d, die Speisewasser vom Ausgang der Vorwärmheizfläche 13 zurück zu deren Eingang pumpen kann, so daß die Temperatur des in diese Vorwärmheizfläche eintretenden Speisewassers erhöht wird.

In den Anlagen nach den Figuren 1 bis 3 ist der Kondensator 11 mit der Kondensatpumpe 43 die gemeinsame Speisewasserversorgungseinrichtung, aus der das Ausgangsspeisewasser einheitlicher Ausgangsqualität stammt, das schließlich verschieden konditioniert einerseits den Verdampferheizflächen 5 und 9 und andererseits der Verdampferheizflälche 8 zufließt.

## Patentansprüche

1. Dampferzeuger, insbesondere Abhitzedampferzeuger, mit einem langgestreckten Gaszug (2), der ein Eintrittsende (3) für Heißgas und ein Austrittsende (4) für das abgekühlte Heißgas aufweist, sowie mit einer ersten Verdampferheizfläche (5, 9), an der eingangsseitig eine erste Zufuhrleitung (10) für Speisewasser durchflußmäßig angeschlossen ist und die sich im Gaszug (2) in Durchströmrichtung des Heißgases gesehen vor einer zweiten Verdampferheizfläche (8) befindet, die sowohl eingangs- als auch ausgangsseitig durchflußmäßig an einer mit einer zweiten Zufuhrleitung (6) für Speisewasser versehenen Niederdrucktrommel (7) angeschlossenen ist, wobei die erste Zufuhrleitung (10) eine erste Aufbereitungsstelle (47) zum Zugeben und/oder Entziehen von Chemikalien zur Wasseraufbereitung und die zweite Zufuhrleitung (6) eine zweite Aufbereitungsstelle (46) zum Zugeben und/oder Entziehen von Chemikalien zur Wasseraufbereitung aufweist,
**dadurch gekennzeichnet, daß** die erste Zufuhrleitung (10) eine Vorwärmheizfläche (12a) enthält, die innerhalb des Gaszugs (2) angeordnet ist, und
daß die zweite Zufuhrleitung (6) durchflußmäßig an einer Anschlußstelle zwischen der Vorwärmheizfläche (12a) und der Verdampferheizfläche (5, 9) an der ersten Zufuhrleitung (10) angeschlossen ist.

2. Dampferzeuger nach Anspruch 1,
**dadurch gekennzeichnet, daß** die erste Zufuhrleitung (10) durchflußmäßig vor der Vorwärmheizfläche (12a) die erste Aufbereitungsstelle (47) zum Zugeben und/oder Entziehen von Chemikalien zur Wasseraufbereitung aufweist und
daß die zweite Zufuhrleitung (6) durchflußmäßig hinter ihrer Anschlußstelle an der ersten Zufuhrleitung (10) die zweite Aufbereitungsstelle (46) zum Zugeben und/oder Entziehen von Chemikalien zur Wasseraufbereitung aufweist.

3. Dampferzeuger nach Anspruch 2,
**dadurch gekennzeichnet, daß** die erste Zufuhrleitung (10) durchflußmäßig hinter der Anschlußstelle der zweiten Zufuhrleitung (6) und vor der Verdampferheizfläche (5, 9) eine dritte Aufbereitungsstelle (48) zur Speisewasseraufbereitung, insbesondere zum Zugeben von Chemikalien, aufweist.

4. Durchlaufdampferzeuger nach Anspruch 1,
**dadurch gekennzeichnet, daß** die erste Zufuhrleitung (10) eine erste Vorwärmheizfläche (12a) enthält, die innerhalb des Gaszugs (2) angeordnet ist,
daß die zweite Zufuhrleitung (6) eine zweite, innerhalb des Gaszugs (2) angeordnete Vorwärmheizfläche (13) enthält und durchflußmäßig an einer ersten Anschlußstelle vor der ersten Vorwärmheizfläche (12a) an der ersten Zufuhrleitung (10) angeschlossen ist,
daß die erste Zufuhrleitung (10) durchflußmäßig vor der ersten Vorwärmheizfläche (12a) und hinter der ersten Anschlußstelle die erste Aufbereitungsstelle (47) zum Zugeben und/oder Entziehen von Chemikalien zur Wasseraufbereitung aufweist und
daß die zweite Aufbereitungsstelle (46) zum Zugeben und/oder Entfernen von Chemikalien zur Wasseraufbereitung an der zweiten Zufuhrleitung (6) durchflußmäßig vor der zweiten Vorwärmheizfläche (13) vorgesehen ist.

5. Dampferzeuger nach einem der Ansprüche bis 3,
**dadurch gekennzeichnet, daß** die zweite Aufbereitungsstelle (46) ein Entgasungsgefäß zum Entziehen einer gasförmigen Chemikalie aus dem Speisewasser aufweist.

6. Verfahren zum Betreiben eines Dampferzeugers nach Anspruch 2,
**dadurch gekennzeichnet, daß** an der ersten Aufbereitungsstelle (47) NH₃ und O₂ zugegeben und an der zweiten Aufbereitungsstelle (46) NH₃ zugegeben und O₂ entzogen wird.,

7. Verfahren zum Betreiben eines Dampferzeugers nach Anspruch 3,
**dadurch gekennzeichnet, daß** an der ersten (47) und an der zweiten (46) Aufbereitungsstelle NH₃ und an der dritten Aufbereitungsstelle (48) O₂ zugegeben wird.

8. Verfahren zum Betreiben eines Dampferzeugers nach Anspruch 4,
**dadurch gekennzeichnet, daß** an der ersten Aufbereitungsstelle (47) NH₃ und O₂ und an der. zweiten Aufbereitungsstelle (46) NH₃ zugegeben wird.

## Claims

1. Steam generator, in particular waste-heat steam generator, with an elongate gas flue (2), which has an inflow end (3) for hot gas and an outflow end (4) for the cooled hot gas, and with a first evaporator heating surface (5, 9), to which a first supply line (10) for feed water is throughflow-connected on the inlet side and which, as seen in the throughflow direction of the hot gas, is located in the gas flue (2) upstream of a second evaporator heating surface (8) which is throughflow-connected both on the inlet and on the outlet side to a low-pressure drum (7) provided with a second supply line (6) for feed water, the first supply line (10) having a first treatment point (47) for adding and/or extracting chemicals for water treatment and the second supply line (6) having a second treatment point (46) for adding and/or extracting chemicals for water treatment, **characterized in that** the first supply line (10) contains a preheating heating surface (12a) which is arranged within the gas flue (2), and **in that** the second supply line (6) is throughflow-connected to the first supply line (10) at a connection point between the preheating heating surface (12a) and the evaporator heating surface (5, 9).

2. Steam generator according to Claim 1, **characterized in that** the first supply line (10) has, upstream of the preheating heating surface (12a) in terms of throughflow, the first treatment point (47) for adding and/or extracting chemicals for water treatment, and **in that** the second supply line (6) has, downstream of its point of connection to the first supply line (10) in terms of throughflow, the second treatment point (46) for adding and/or extracting chemicals for water treatment.

3. Steam generator according to Claim 2, **characterized in that** the first supply line (10) has, downstream of the connection point of the second supply line (6) and upstream of the evaporator heating surface (5, 9) in terms of throughflow, a third treatment point (48) for feed-water treatment, in particular for adding chemicals.

4. Once-through steam generator according to Claim 1, **characterized in that** the first supply line (10) contains a first preheating heating surface (12a) which is arranged within the gas flue (2), **in that** the second supply line (6) contains a second preheating heating surface (13) arranged within the gas flue (2) and is throughflow-connected to the first supply line (10) at a first connection point upstream of the first preheating heating surface (12a), **in that** the first supply line (10) has, upstream of the first preheating heating surface (12a) and downstream of the first connection point in terms of throughflow, the first treatment point (47) for adding and/or extracting chemicals for water treatment, and **in that** the second treatment point (46) for adding and/or removing chemicals for water treatment is provided on the second supply line (6) upstream of the second preheating heating surface (13) in terms of throughflow.

5. Steam generator according to one of Claims 1 to 3, **characterized in that** the second treatment point (46) has a deaeration vessel for extracting a gaseous chemical from the feed water.

6. Method for operating a steam generator according to Claim 2, **characterized in that** NH₃ and O₂ are added at the first treatment point (47) and NH₃ is added and O₂ extracted at the second treatment point (46).

7. Method for operating a steam generator according to Claim 3, **characterized in that** NH₃ is added at the first (47) and the second (46) treatment point and O₂ is added at the third treatment point (48).

8. Method for operating a steam generator according to Claim 4, **characterized in that** NH₃ and O₂ are added at the first treatment point (47) and NH₃ is added at the second treatment point (46).

## Revendications

1. Générateur de vapeur, notamment générateur de vapeur à récupération de la chaleur perdue, comprenant un trajet (2) pour les gaz qui s'étend en longueur, qui a une extrémité (3) d'entrée pour du gaz chaud et une extrémité (4) de sortie pour le gaz chaud refroidi, ainsi qu'une première surface (5, 6) de chauffe d'évaporateur à laquelle est raccordé du côté entrée un premier conduit (10) d'apport d'eau d'alimentation et qui se trouve dans le trajet (2) de gaz tel que considéré dans le sens de passage du gaz chaud en amont d'une deuxième surface (8) de chauffe d'évaporateur qui est raccordée tant du côté entrée que du côté sortie à un ballon (7) basse pression muni d'un deuxième conduit (6) d'apport d'eau d'alimentation, le premier conduit (10) d'apport ayant un premier point (47) de traitement pour l'addition et/ou le retrait de produits chimiques de traitement de l'eau, et le deuxième conduit (6) d'apport ayant un deuxième point (46) de traitement pour l'addition et/ou le retrait de produits chimiques de traitement de l'eau,
**caractérisé en ce que** le premier conduit (10) d'apport comporte une surface (12a) de chauffe de préchauffage qui est disposée dans le trajet (2) pour le gaz, et **en ce que** le deuxième conduit (6) d'apport est raccordé à un point de raccordement compris entre la surface (12a) de chauffe de préchauffage et la surface (5, 9) de chauffe d'évaporateur sur le premier conduit (10) d'apport.

2. Générateur de vapeur suivant la revendication 1,
**caractérisé en ce que** le premier conduit (10) d'apport a, en amont de la surface (12a) de chauffe de préchauffage, le premier point (47) de traitement pour l'addition et/ou le retrait de produits chimiques de traitement de l'eau et
**en ce que** le deuxième conduit (6) d'apport a, en aval de son point de raccordement au premier conduit (10) d'apport, le deuxième point (46) de traitement pour l'addition et/ou le retrait de produits chimiques de traitement de l'eau.

3. Générateur de vapeur suivant la revendication 2,
**caractérisé en ce que** le premier conduit (10) d'apport a, en aval du point de raccordement du deuxième conduit (6) d'apport et en amont de la surface (5, 9) de chauffe d'évaporateur, un troisième point (48) de traitement pour le traitement de l'eau d'alimentation, notamment pour l'addition de produits chimiques.

4. Générateur de vapeur suivant la revendication 1,
**caractérisé en ce que** le premier conduit (10) d'apport comporte une première surface (12a) de chauffe de préchauffage qui est disposée dans le trajet (2) pour le gaz,
**en ce que** le deuxième conduit (6) d'apport comporte une deuxième surface (13) de chauffe de préchauffage disposée dans le trajet (2) pour les gaz et est raccordé à un premier point de raccordement en amont de la première surface (12a) de chauffe de préchauffage au premier conduit (10) d'apport,
**en ce que** le premier conduit (10) d'apport a, en amont de la première surface (12a) de chauffe de préchauffage et en aval du premier point de raccordement, le premier point (47) de traitement pour l'addition et/ou le retrait de produits chimiques de traitement de l'eau, et
**en ce que** le deuxième point (46) de traitement pour l'addition et/ou l'enlèvement de produits chimiques de traitement de l'eau est prévu sur le deuxième conduit (6) d'apport en amont de la deuxième surface (13) de chauffe de préchauffage.

5. Générateur de vapeur suivant l'une des revendications 1 à 3,
**caractérisé en ce que** le deuxième point (46) de traitement a un récipient de dégazage pour le retrait d'un produit chimique gazeux de l'eau d'alimentation.

6. Procédé pour faire fonctionner un générateur de vapeur suivant la revendication 2,
**caractérisé en ce que** l'on ajoute NH₃ et O₂ au premier point (47) de traitement et on ajoute du NH₃ et on retire du O₂ au deuxième point (46) de traitement.

7. Procédé pour faire fonctionner un générateur de vapeur selon la revendication 3,
**caractérisé en ce que** l'on ajoute du NH₃ au premier point (47) et au deuxième point (46) de traitement et on ajoute de l'O₂ au troisième point (48) de traitement.

8. Procédé pour faire fonctionner un générateur de vapeur selon la revendication 4,
**caractérisé en ce que** l'on ajoute du NH₃ et du O₂ au premier point (47) de traitement et on ajoute du NH₃ au deuxième point (46) de traitement
